# EUROPÄISCHE PATENTSCHRIFT

(11) **EP 2 117 742 B1**
(45) Veröffentlichungstag und Bekanntmachung des Hinweises auf die Patenterteilung: **13.10.2010**
(21) Anmeldenummer: 08701132.6
(22) Anmeldetag: 16.01.2008
(51) Int. Cl.: B21D 3/04, B23P 15/26, F28D 1/03, F28D 9/00, F28F 3/02, B21C 37/15, F28F 1/02

(54) **Herstellungsverfahren für Flachrohre sowie Walzenstrasse zur Durchführung des Verfahrens.**
Method for producing flat tubes and rolling mill for carrying out the method.
Procédé de production de tuyaux plats et laminoir pour la mise en oeuvre du procédé.

(30) Priorität: 01.02.2007 DE 102007004993
(43) Veröffentlichungstag der Anmeldung: 18.11.2009
(60) Teilanmeldung: 10008153.8
(73) Patentinhaber: Modine Manufacturing Company, Racine, Wisconsin 53403-2552 (US)
(72) Erfinder: OPFERKUCH, Frank, 72669 Unterensingen (DE); BORST, Daniel, 72649 Wolfschlugen (DE); PLOPPA, Martin, 72795 Pfullingen (DE); ZOBEL, Werner, 71032 Böblingen (DE); NIES, Jens, 71088 Holzgerlingen (DE); STOLZ, Andreas, 72141 Waldorfhäslach (DE); MERZ, Dieter, 72359 Dotternhausen (DE); EISELE, Siegfried, 71101 Schönaich (DE)
(74) Vertreter: Wolter, Klaus-Dietrich
(86) Internationale Anmeldenummer: PCT/EP2008/000288
(87) Internationale Veröffentlichungsnummer: WO 2008/092563

(56) Entgegenhaltungen:
- WO-A-95/30867
- DE-A1-102005 050 366
- US-B1- 6 195 874
- US-B1- 6 286 201

## Beschreibung

Die Ereindung betrifft ein Herstellungsverfahren für Flachrohre, aus wenigstens einem Streifen endlosen Bandmaterials mit wenigstens einem:Wandteil und einem mit Wellen ausgebildeten Innenteil auf einer mit Walzenpaaren ausgerüsteten Walzenstraße, wobei der Streifen in Längsrichtung durch die Walzen läuft und umgeformt wird wo bei das mit Wetten ausgebildete Innenteil zwischen das umgeformte Wandteil gebracht wird, wonach das Schließen des Flachrohrs erfolgt. Ferner betrifft die Erfindung eine Walzenstraße, auf der das Verfahren ausgeführt wird und einen Wärmetauscher, der die hergestellten Flachrohre aufweist.

Die vorstehend aufgeführten Verfahrensschritte gehen aus der älteren. Patentanmeldung mit dem Aktenzeichen DE 10 2006 029 378.9 hervor.

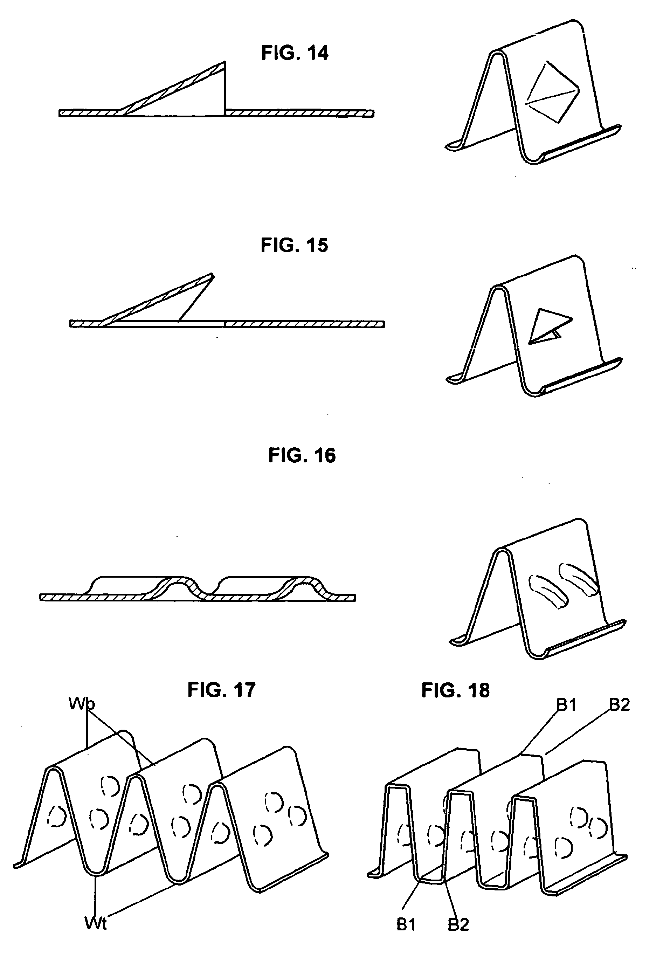

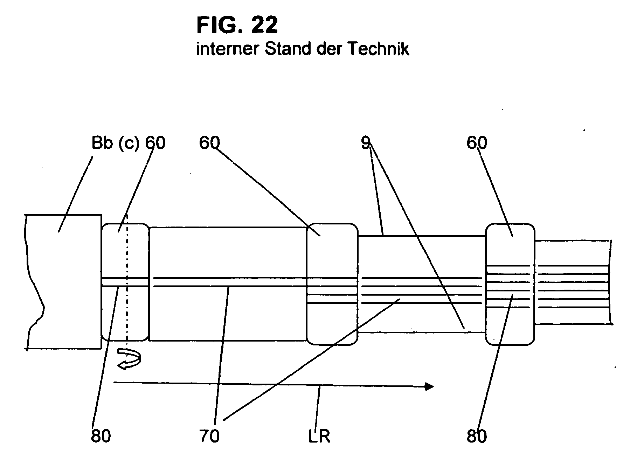

Zur Herstellung der Flachrohre ist eine Walzenstraße erforderlich, die sich, beispielsweise in Abhängigkeit von der gewünschten Geometrie des Innenteiles bzw. des "endlosen" Streifens, aus dem das Innenteil erzeugt wird, über mehr als 10-20 m erstrecken könnte, was erhebliche Investitionsmittel erfordert. In der dortigen Fig. 16, die als Fig. 22 in dieser Anmeldung vorhanden ist, wird der Sachverhalt angedeutet. Wie die genannte Abbildung zeigt, wird im Zuge der Herstellung der Wellungen 70 des Innenteiles, die Breite des Streifens entsprechend reduziert und die Anzahl der Wellungen 70 erhöht, wodurch u. a. der Installationsaufwand der Walzenstraße beeinflusst wird, weil zahlreiche Walzenpaare 60 erforderlich sind.

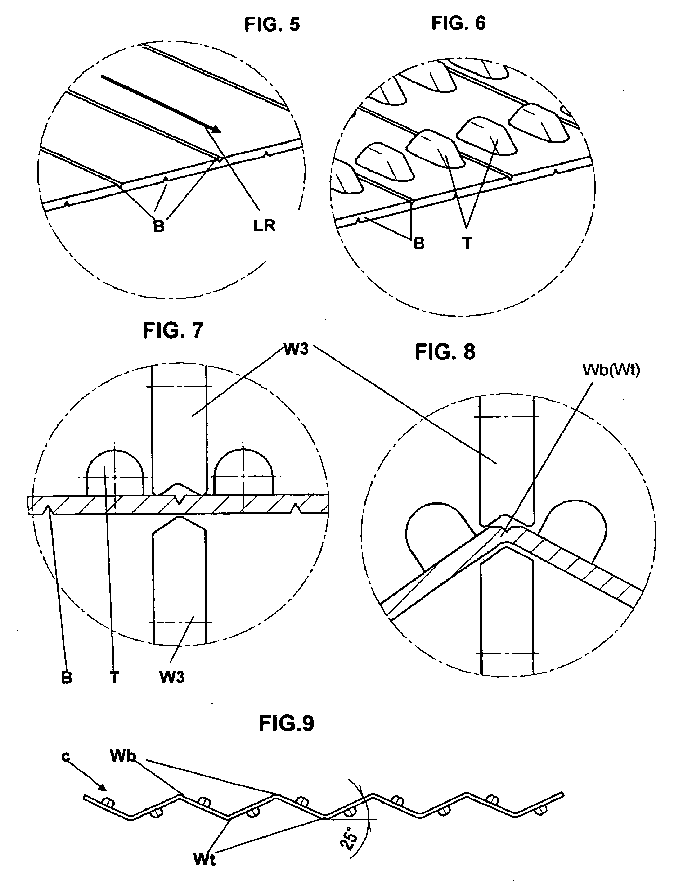

Die Fig. 5 in der DE 198:00.096A1 zeigt ebenfalls eine Vielzahl von Walzenpaaren. Ansonsten wird dort die Herstellung gewellter Platten beschrieben.

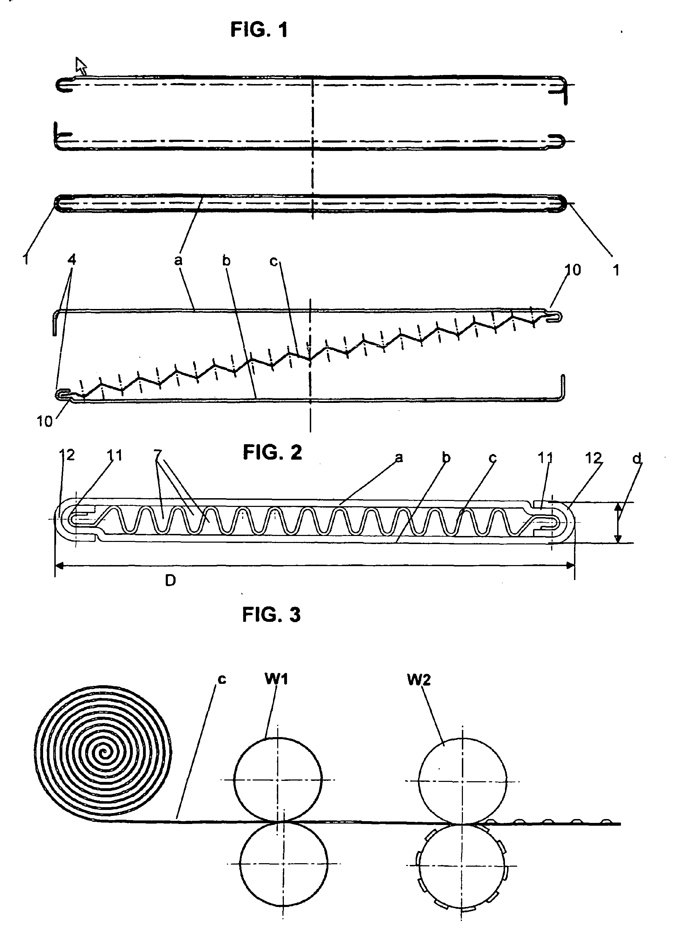

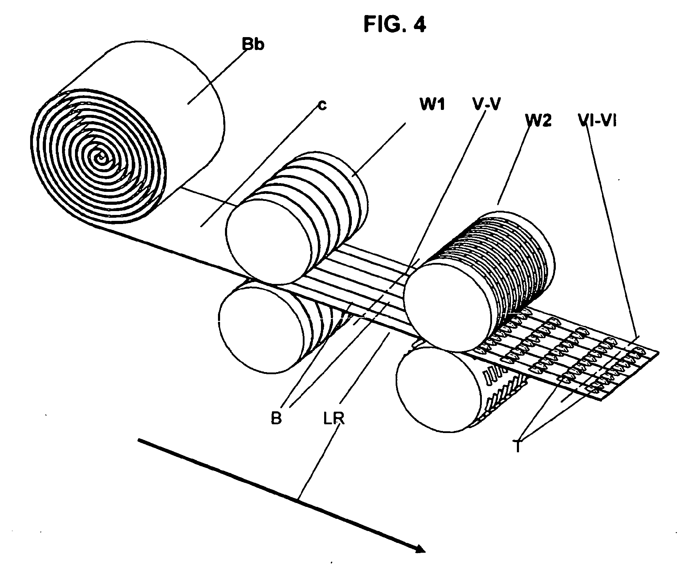

Aus der Fig. 4 der US 6 286 201 B1 geht ein Herstellungsverfahren für Flachrohre gemäß dem Oberbegriff des Anspruchs 1 hervor. Im Zuge des Schließens des Flachrohres wird dort ein bereits mit Wellen vorgeformter, aufgewickelter Innenteil des Flachrohrs in dasselbe eingefädelt. Die Wellen des vorgeformten Innenteils werden nicht auf der Walzenstraße zur Herstellung der Flachrohre ausgebildet sondern in einem davor liegenden Prozess auf einer separaten Walzen-Vorrichtung. Die Wellenberge und Wellentäler des Innenteils erstrecken sich in Querrichtung des Streifens bzw. des Flachrohres, sodass innen, an den beiden Schmalseiten: des Flachrohes, jeweils ein Kanal vorhanden sein muss, um die Durchströmung des Flachrohres zu ermöglichen, wie die Fig. 2 zeigt.

Im Unterschied dazu erstrecken sich die Wellenberge und Wellentäler in der DE 10 2005 050 366A1 in Längsrichtung des Flachrohres bzw. des Innenteils und bilden in Längsrichtung laufende Kanäle aus. Ansonsten wird in dieser Referenz u. a. gelehrt, den Kantenbereich des das Flachrohr bildenden Streifens plastisch zu verformen, um einen Rohrquerschnitt ohne schroffe Übergänge bzw. Absätze zu erhaltene Die Schmalseiten dieses Flachrohres besitzen nicht die erforderliche Stabilität.

In der US 6 195 874B1 wird die Herstellung von Wellrippen gezeigt und beschrieben, die zur Kühlung von elektronischen Komponenten eingesetzt werden. Die Wellrippen werden aus einem Blehstreifen erzeugt, der mit in Querrichtung des Blechstreifens laufenden Einkerbungen (Bandverdünnungslinien) versehen wird, um die folgende Ausbildung der Wellenberge und Wellentäler zu erleichtern.

Für denselben Zeck werden in der WO 95/30867A keine Einkerbungen sondern in Querrichtung des Blechbandes laufende Sicken vorgeschlagen.

Die Aufgabe der Erfindung besteht darin, einen Vorschlag zu unterbreiten, der die Herstellung der Flachrohre vereinfacht, und der demnach auch den Aufwand für Investitionsmittel reduzieren kann.

Die erfindungsgemäße Lösung der Aufgabenstellung ergibt sich mit einem Herstellungsverfahren, welches die Merkmale des Anspruchs 1 aufweist.

Das Herstellungsverfahren wird auf einer Walzenstraße ausgeführt, die die Merkmale des Anspruchs 11 aufweist. Die Walzenstraße weist wenigstens einen Abschnitt zum Umformen des wenigstens einen endlosen Streifens, einen Abschnitt zum Vereinigen des Streifens zum Rohr und eine Abtrennstation für Rohre auf, wobei sie derart weitergebildet wurde, dass die Walzenstraße wenigstens ein Walzenpaar aufweist, mit dem in Längsrichtung des Streifens laufende Bandverdünnungslinien herstellbar sind.

Die Walzenstraße weist außerdem wenigstens ein Walzenpaar auf, mit dem die in den Bandverdünnungslinien liegenden Wellenberge bzw. Wellentäler im Streifen ausgebildet werden.

Gemäß einem wesentlichen Verfahrensaspekt ist vorgesehen, dass in Längsrichtung des Streifens laufende beabstandete Bandverdünnungslinien ausgebildet werden und dass anschließend in den Bandverdünnungslinien liegende Wellenberge und Wellentäler hergestellt werden. Durch die Bandverdünnungslinien kann die darauf folgende Ausbildung der Wellungen wesentlich vereinfacht werden, weil sich die Wellentäler und Wellenberge leichter, das heißt mit weniger Kraftaufwand, ausbilden lassen. Die Bandverdünnungslinien geben dem Streifen gewissermaßen vor, wo er sich zur Erzeugung der Wellenberge und der Wellentäler einknicken lassen soll. Die Tiefe der Bandverdünnungslinien kann beispielsweise im Bereich von 50% der Dicke des Streifens liegen.

Gemäß einem anderen Aspekt ist vorgesehen, dass vor oder nach der Ausbildung der Bandverdünnungslinien zwischen denselben senkrecht oder schräg dazu sich erstreckende Turbulatoren eingebracht und/oder aus der Ebene des Streifens herausgestellt werden. Dies verbessert den Wärmeübergang zwischen einem im Inneren der Flachrohre strömenden Medium und einem außen um das Flachrohr strömenden Medium. Die Turbulatoren können bekannte Schnitte sein, die aus der Ebene des Streifens herausgedreht werden, oder sie können eine beliebige andere, den Zweck erfüllende Gestaltung besitzen. Unter der Bezeichnung "Turbulatoren" sollen jedoch auch Ausbildungen zu verstehen sein, die lediglich aus zwischen den Bandverdünnungslinien liegenden Löchern im Streifen bestehen, ohne dass ein Materialstück aus der Ebene des Streifens herausgestellt ist.

Ein weiterbildender Aspekt sieht vor, dass die Bandverdünnungslinien in parallelen Linien ausgebildet werden.

Dabei ist bevorzugt, dass die Bandverdünnungslinien abwechselnd an der Oberseite und an der Unterseite des einen Streifens ausgebildet werden. In Abhängigkeit von der Geometrie der Wellen des Inneneinsatzes können aber auch beispielsweise auf zwei an der Oberseite vorhandene Bandverdünnungslinien zwei auf der Unterseite liegende Bandverdünnungslinien folgen. Der Abstand zwischen den erwähnten zwei, also jeweils ein Paar bildende Bandverdünnungslinien, ist meist kleiner als der Abstand zum nächsten Paar Bandverdünnungslinien.

Im Gegensatz dazu ist es jedoch möglich, dass die Bandverdünnungslinien alle an einer Seite des Streifens ausgebildet werden.

Mit Blick auf den Installationsaufwand ist es von Vorteil, dass sämtliche Bandverdünnungslinien mittels vorzugsweise eines einzigen Walzenpaares ausgebildet werden. Weiterhin ist vorgesehen, dass die Wellenberge und die Wellentäler mittels Walzenpaare, durch die der Streifen in seiner Längsrichtung hindurch läuft, ausgebildet werden. Die Wellenlaufrichtung ist quer zur Längsrichtung des Streifens.

Das Wandteil des Flachrohres und das mit Wellen ausgebildete Innenteil können Teile eines einzigen Streifens sein. Im Unterschied dazu besteht in einem bevorzugten Ausführungsbeispiel das Innenteil aus einem ersten Streifen und das Wandteil kann aus einem zweiten Streifen, oder aus dem zweiten und aus einem dritten Streifen hergestellt sein.

Ein Flachrohr, welches nach dem vorgeschlagenen Herstellungsverfahren auf der vorgeschlagenen Walzenstraße zur Verfügung gestellt werden kann, ist aus der bisher unveröffentlichten deutschen Patentanmeldung DE 10 2006 006 670.7 intern bekannt. Das intern bekannte Flachrohr eignet sich insbesondere dazu, die Blechdicken weiter zu reduzieren, bis in den Bereich von 0,03 - 0,15 mm hinein. Mit solchen Flachrohren ausgerüstete Wärmetauscher erfüllen die an sie zu stellenden Anforderungen insbesondere im Bereich Kraftfahrzeuge.

Beide Schmalseiten des Flachrohes sind verstärkt worden. Die Dicke der Streifen des Flachrohrs beträgt 0,25 mm oder weniger. Die drei Streifen können die gleiche Dicke aufweisen. Demgegenüber können die die Wand bildenden Streifen eine Dicke von weniger als 0,25 mm, beispielsweise 0,12 mm, aufweisen und die Dicke des dritten Streifens kann weniger als 0,10 mm betragen.

Die Dicke jedes der drei Streifen kann auch im Bereich von 0,03 mm - 0,15 mm liegen um einen kostengünstigen Wärmetauscher mit guten Wärmeübertragungseigenschaften bereitzustellen.

Das Innenteil ist mit in Querrichtung des Flachrohres laufenden Wellungen versehen, die in Längsrichtung des Flachrohres laufende Kanäle ausbilden. Solche geraden Wellungen sind äußerst kostengünstig und einfach zu realisieren. Die Wellungen sind so ausgebildet, dass die Wellenflanken etwa senkrecht auf den Breitseiten stehen oder lediglich einen kleinen Neigungswinkel aufweisen.

Der kleine Durchmesser d des Flachrohres liegt im Bereich von etwa 0,7 mm bis beispielsweise 1,5 mm, wenn solche Flachrohre in einem Kühlmittelkühler eingebaut sind. Bei Ladeluftkühlern kann der kleine Durchmesser d auch größer als 10,0 mm sein. Der große Durchmesser D kann in weiten Bereichen frei bestimmt werden, indem ein entsprechend breites Ausgangs-Bandmaterial zum Einsatz kommt. Die Rollenwalzen können zur Herstellung breiterer oder schmalerer Flachrohre einstellbar sein. Bevorzugt werden jedoch Rollensätze, die bevorzugte Rohrabmessungen repräsentieren, komplett ausgewechselt. Deshalb ermöglichen die nach dem Verfahren hergestellten Flachrohre auch die kostengünstige Herstellung von Wärmetauschern mit breiteren (tieferen) oder schmaleren Kühlnetzen unter Beibehaltung nur einer einzigen Rohrreihe.

Die Erfindung wird nun in verschiedenen Ausführungsbeispielen unter Bezugnahme auf die beigefügten Zeichnungen kurz beschrieben. Die Beschreibung der Ausführungsbeispiele kann weitere bevorzugte Merkmale und Vorteile aufzeigen.

Die Fig. 1 zeigt ein bevorzugtes Flachrohr, in das ein Innenteil eingefügt wird.

Die Fig. 2 zeigt ein bevorzugtes fertig hergestelltes Flachrohr im Querschnitt.

Die Fig. 3 und 4 zeigen einen vereinfachten Ausschnitt aus der Walzenstraße.

Die Fig. 5-9 zeigen im Zuge des Verfahrensablaufes vorliegende Umformstadien an dem einen Streifen, jeweils quer zu dessen Längsrichtung LR gesehen.

Die Fig. 10 -16 zeigen einen gewellten Streifen mit unterschiedlichen Turbulatoren

Die Fig. 17 und 18 zeigen Streifen mit unterschiedlichen Wellungen.

Die Fig. 19 zeigt einen Herstellungsablauf für ein anderes bevorzugtes Flachrohr.

Die Fig. 20 zeigt einen Herstellungsablauf für ein weiteres Flachrohr.

Die Fig. 21 zeigt eine Walzenstraße im Prinzip.

Die Fig. 22 zeigt den Stand der Technik aus einer gegenwärtig noch nicht veröffentlichten Patentanmeldung.

Die Streifen **a** und **b** des Flachrohres in der bevorzugten Ausführung gemäß den Fig. 1 und 2 sind identisch ausgebildet, jedoch mit seitenverkehrten Längsrändern **4** zueinander angeordnet worden. Das heißt, der eine Längsrand **4** der Streifen a und **b** ist mit einer Abstufung **10** versehen, an der sich ein in die spätere Schmalseite 1 laufender kleinerer Bogen **11** anschließt und der andere Längsrand ist lediglich mit einem die andere spätere Schmalseite **1** bildenden größeren Bogen **12,** (ohne Abstufung 10) versehen, der dazu geeignet ist, am späteren Flachrohr den kleineren Bogen **11** des jeweils anderen Streifens **a** bzw. **b** in sich aufzunehmen. In der ***Fig. 1*** wurde ein Streifen **a** oder **b** in einem Zustand gezeichnet, bei dem der große Bogen **12** noch nicht fertig hergestellt ist. Der Begriff "Bogen" soll nicht bedeuten, dass es sich dabei um nichts anderes als um ein Halbrund handeln kann. Vielmehr bedeutet der Begriff "Bogen" eine geeignete Geometrie, die den Zweck erfüllen kann.

Die die Wellenberge **Wb** und die Wellentäler **Wt** verbindenden Wellenflanken sind lediglich geringfügig geneigt angeordnet. Beide Längsränder des Innenteiles **c** sind gemäß Fig. 2 so verformt, dass sie innen an den Schmalseiten **1** des Flachrohres anliegen und somit beide Schmalseiten **1** verstärken. Die Dicke jeder Schmalseite **1** entspricht im Ausführungsbeispiel gemäß Fig. 2 somit der Summe der Dicke der drei Streifen **a, b, c.** Die drei Streifen **a, b, c** können die gleiche Dicke aufweisen. Das Dickenmaß jedes der drei Streifen **a, b, c** kann im Bereich von 0,03 mm - 0,15 mm liegen. Bevorzugt weisen die die Wand bildenden Streifen **a, b ein** Dickenmaß etwa zwischen 0, 10 mm - 0,25 mm auf und das Dickenmaß des dritten Streifens c beträgt etwa zwischen 0,03 - 0, 10 mm. Trotz dieser geringen Blechdicken weisen beide Schmalseiten **1** des Flachrohres eine relativ gute Stabilität auf.

Die Wellungen des Innenteiles c laufen in Querrichtung des Flachrohres und bilden in Längsrichtung des Flachrohres laufende Kanäle **7** aus. Die Kanäle **7** sind als diskrete oder als offene Strömungskanäle **7** ausgebildet. Der hydraulische Durchmesser der Kanäle **7** kann durch entsprechende Ausbildung der Wellungen bestimmt werden. Er ist relativ klein, wenn man bedenkt, dass der kleine Durchmesser **d** der Flachrohre etwa 0,8 mm betragen kann und die Anzahl der Wellungen relativ groß ist. Wenigstens einige der Streifen **a, b, c** besitzen eine zweckmäßige Lotbeschichtung, denn es ist vorgesehen, die Streifen **a, b, c** des Flachrohrs und auch das gesamte Kühlnetz des Wärmetauschers mittels eines Lötverfahrens zu verbinden. (nicht gezeigt) Die Streifen **a, b, c** des Flachrohres bestehen im Ausführungsbeispiel aus Aluminiumblech, welches als endloses Bandmaterial zur Verfügung gestellt wird. Weitere Einzelheiten gehen aus der genannten älteren Anmeldung mit der Anmeldenummer DE 10 2006 006 670.7, deren gesamter Inhalt zur Vermeidung weiterer Erklärungen an dieser Stelle als vollständig gezeigt und beschrieben gelten soll.

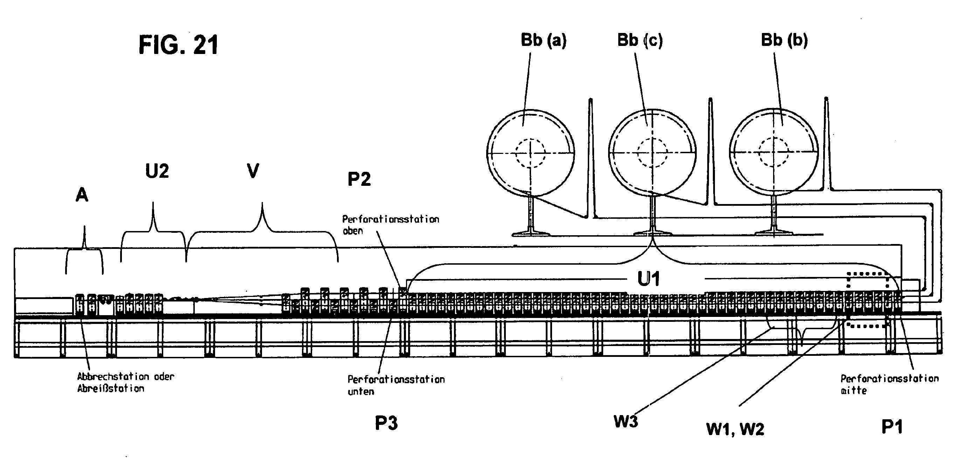

Wie das Ausführungsbeispiel in der Fig. 21 zeigt, und wie bereits erwähnt wurde, werden drei Blechbänder **Bb** (coils) bzw. drei Streifen **a, b, c** eingesetzt. Ein Blechband **Bb** dient der Herstellung des einen Wandteils **a,** ein anderes Blechband dient der Herstellung des zweiten Wandteiles **b,** und das dritte, das breiteste Blechband **Bb** (Fig. 21 in der Mitte) dient der Herstellung des Innenteiles **c.** Die abspulenden Blechbänder **Bb** laufen zunächst über Rolleneinrichtungen, die eine bestimmte Pufferung von Bandmaterial gestatten. Zu erkennen sind in der Fig. 21 dazu dienende Bandschlaufen. Die Herstellung des Flachrohres beginnt mit der Herstellung bzw. mit der Umformung des Innenteiles **c.** Ziemlich nahe am Beginn der Walzenstraße befindet sich wenigstens ein Walzenpaar **W1,** mit dem Bandverdünnungslinien **B** in den noch ebenen Streifen c in dessen Längsrichtung **LR** eingearbeitet werden, was die Fig. 3 oder 4 näher zeigen. Die erwähnten Linien **B** werden mittels des Walzenpaares **W1** eingeprägt. Im Ausführungsbeispiel weist das Walzenpaar **W1** eine solche Breite auf, dass sämtliche Bandverdünnungslinien B mit dem einen Walzenpaar **W1** ausgebildet werden können. Weiter zeigen insbesondere die Fig. 5, 6 oder 7, dass im vorliegenden Ausführungsbeispiel die Bandverdünnungslinien **B** abwechselnd an der Oberseite und an der Unterseite des Streifens c ausgebildet werden. Dort sind beabstandete einzelne Linien **B** vorgesehen. Die Linien **B** können allerdings auch paarweise angeordnet werden (siehe Fig. 18, **B1, B2).** Es ist auch möglich, sämtliche Bandverdünnungslinien **B** an einer Seite des Streifens c auszubilden. Dabei zeigt die Fig. 5 den Streifen c nach dem Verlassen des Walzenpaares **W1** an der Linie V-V in Fig. 4. Die Fig. 6 zeigt den Streifen **c** an der Linie VI-VI in der Fig. 4, nach Verlassen des nächsten Walzenpaares **W2,** mit dem Turbulatoren **T** zwischen den Bandverdünnungslinien B eingearbeitet worden sind.

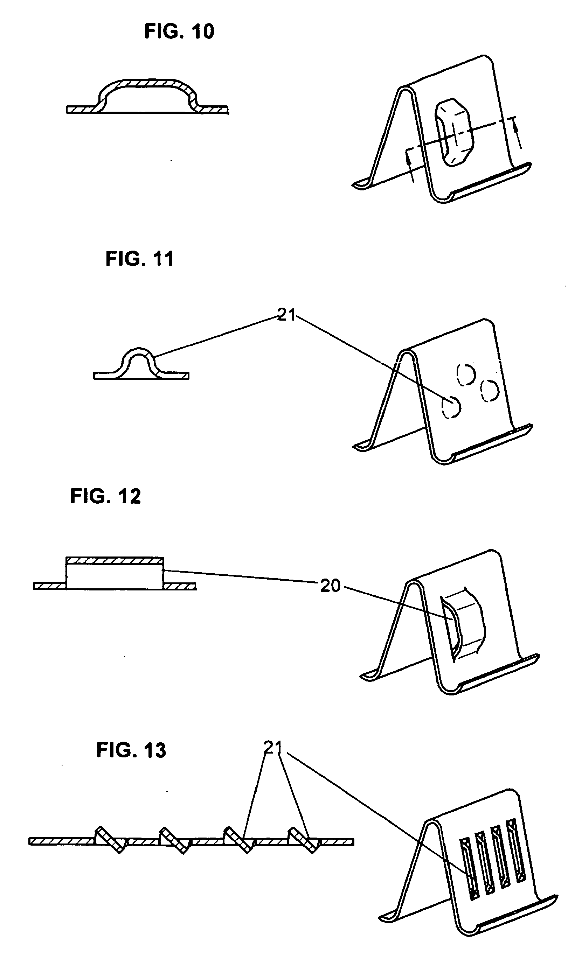

In den Fig. 10 - 16 werden verschiedene Turbulatoren **T** gezeigt, die zwischen den Bandverdünnungslinien **B** angeordnet sind. Es kann sich dabei um Auswölbungen **21** handeln oder auch um Schnitte **20,** die aus der Ebene des Streifens c herausgestellt werden. Die Turbulatoren **T** werden in das noch ebene Band eingebracht, womit zum Ausdruck gebracht werden soll, dass sich die Ausbildung der Wellen daran anschließt.

Zurückkommend auf die Fig. 21, aus der weiterhin erkennbar ist, dass die Walzenpaare **W1** und **W2** Teil eines ersten Umformabschnittes **U1** der Walzenstraße sind. Wenn der Streifen **c** das Walzenpaar **W2** verlassen hat, beginnt die Ausbildung der Wellenberge **Wb** und Wellentäler **Wt,** was mit Hilfe weiterer Walzenpaare **W3** erfolgt, die auch in den Fig. 7 und 8 angedeutet wurden. Wie diese beiden Figuren zeigen, wird in jeder Bandverdünnungslinie **B** ein Wellenberg **Wb** bzw. ein Wellental **Wt** ausgebildet. Die Fig. 9 zeigt das Innenteil c in einem etwa halb fertigen Zustand, der allerdings auch ein Endzustand sein kann, je nachdem welche konkrete Wellengeometrie für einen gewünschten Einsatzfall vorgesehen wird. Dort sind bereits Wellenberge **Wb** und Wellentäler **Wt** ausgebildet worden.

In dem bereits erwähnten ersten Umformabschnitt **U1** der Walzenstraße beginnt auch die Umformung der Ränder **4** der Wandteile des Flachrohres bzw. der Streifen **a** und **b,** was in der Fig. 21 nicht näher gezeigt wird, was aber mit Blick auf die dritte Darstellung von oben in der Fig. 1 verständlich ist. Dort ist eine Situation zu sehen, wie sie etwa vorliegt, wenn sich die Streifen **a, b und c** im Vereinigungsabschnitt **V** befinden, also wenn sie den ersten Umformabschnitt **U1** bereits verlassen haben, der in der Fig. 21 durch das genannte Bezugszeichen **V** angegeben wurde. Sind die Streifen **a, b, c** miteinander vereinigt worden, wird in einem zweiten Umformabschnitt **U2** (Fig. 21) das Flachrohr geschlossen, so dass schließlich eine Rohrgeometrie vorliegt, wie sie in der Fig. 2 beispielsweise gezeigt wird. Im Anschluss daran erfolgt das Ablängen (Zuschnitt auf gewünschte Länge) einzelner Flachrohre, wozu die Walzenstraße die Abtrennstation **A** aufweist. Das Abtrennen wird vereinfacht bzw. qualitativ verbessert, wenn die Streifen **a, b, c** vorher an den entsprechenden Stellen perforiert oder mit Sollbruchstellen versehen werden, wozu die Walzenstraße mit Perforationsstationen **P1, P2,** und **P3** ausgerüstet wurde. In dem erwähnten Vereinigungsabschnitt V wird dafür gesorgt, dass sich die Sollbruchstellen in den einzelnen Streifen **a, b, c** beim fertig umgeformten Rohr exakt auf einer gemeinsamen Höhe befinden. Die Sollbruchstellen können ebenfalls Bandverdünnungslinien sein, die jedoch, im Unterschied zu den beschriebenen Bandverdünnungslinien **B,** quer zur Längsrichtung **LR** angeordnet sind. (nicht gezeigt)

Die zugeschnittenen Flachrohre werden mit Wellrippen zum Kühlnetz des Wärmetauschers zusammengelegt. Das Kühlnetz oder der gesamte Wärmetauscher wird in einem Lötofen gelötet. Dabei verlöten die Wellrippen mit den Flachrohren und die Flachrohre mit ihren Inneneinsätzen. (nicht gezeigt) Es wurde festgestellt, dass sich die Bandverdünnungslinien **B** auch günstig auf die angesprochene Lötung auswirken. Die Fig. 17 zeigt ein gewelltes Innenteil mit gerundeten Wellenbergen **Wb** und Wellentälern **Wt,** wogegen die Fig. 18 ein Innenteil c zeigt, dessen Wellenberge und Wellentäler im Wesentlichen flach ausgebildet sind. Beide Gestaltungen können gemäß dem Herstellungsverfahren mittels einer Walzenstraße zur Verfügung gestellt werden. Im Ausführungsbeispiel gemäß Fig. 18 können je Wellenberg **Wb** bzw. Wellental **Wt** zwei Bandverdünnungslinien **B1** und **B2** vorgesehen werden, in denen dann jeweils eine Knicklinie ausgebildet wird, sodass der vorliegende Vorschlag auch diese Gestaltung umfasst.

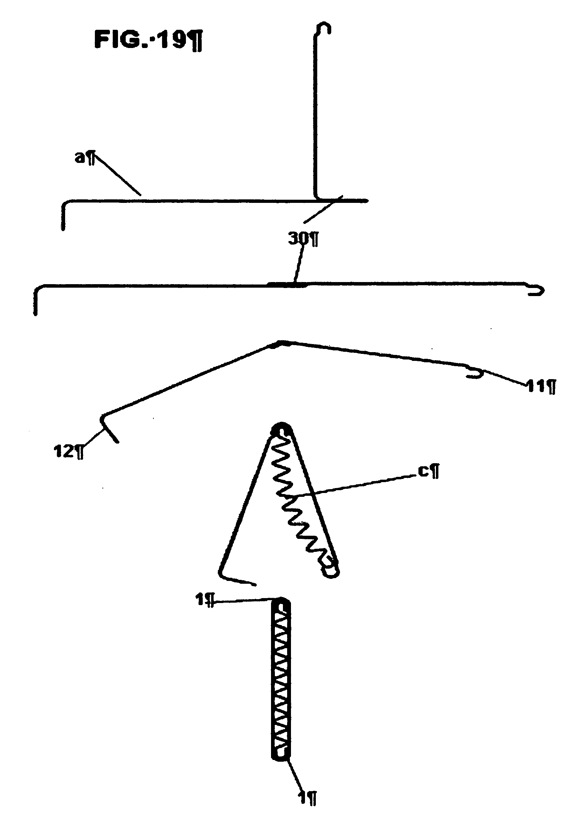

Die Fig. 19 zeigt die Herstellung eines Flachrohres, bei dem lediglich ein einziger Streifen a zur Ausbildung der Wand des Flachrohres vorgesehen ist. Dieser Streifen **a** wird im Vergleich zum bereits beschriebenen Ausführungsbeispiel stärker umgeformt. Es wird hier eine Faltung **30,** in Längsrichtung des Streifens **a** laufend, ausgebildet und danach wird eine in der Faltung **30** liegende Biegung erzeugt, die die eine Schmalseite **1** des Flachrohres bildet. Ein zweiter Streifen c bildet bei diesem Flachrohr das Innenteil aus, der so hergestellt wird, wie vorstehend beschrieben wurde. In der Fig. 19 zeigen die oberen drei Darstellungen Zwischenstadien der Umformung des Streifens **a.** Die vierte Darstellung zeigt das Vereinigen der beiden umgeformten Streifen **a** und c und die untere Darstellung zeigt das fertige Flachrohr. Auch dieses Flachrohr besitzt zwei verstärkte Schmalseiten **1.** Es kann deshalb mit sehr geringer Wanddicke ausgebildet werden.

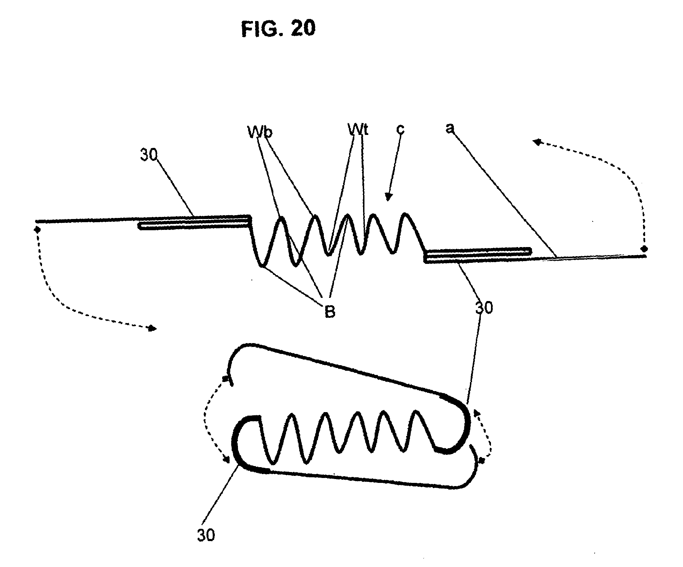

Die zwei verstärkten Schmalseiten treffen auch für das in der Fig. 20 gezeigte Ausführungsbeispiel zu, welches ein Flachrohr skizzenhaft in Zwischenstadien zeigt, das aus einem einzigen Streifen hergestellt wird. Zwei Abschnitte des Streifens werden zu einem Wandteil **a** umgeformt, und ein anderer Abschnitt des Streifens stellt einen mit Wellen ausgebildeten Innenteil **c** dar. Die Wellen haben alle die gleiche Wellenhöhe, auch wenn die Skizzen einen anderen Eindruck vermitteln, denn die Wandteile **a** sollen auch bei diesem Flachrohr parallel zueinander angeordnet sein. Auf der Walzenstraße wird mit der Herstellung des gewellten Innenteils c aus dem erwähnten einen anderen Abschnitt begonnen, wobei zunächst, wie vorne beschrieben, Bandverdünnungslinien **B** eingeprägt werden, woran sich die Herstellung der Wellen anschließt. Daran schließt sich wiederum die Ausbildung von Faltungen **30** an, die zum Wandteil **a** gehören. Der jetzt erreichte Zustand kann in der oberen Darstellung der Fig. 20 gesehen werden. Danach erfolgt das endgültige Schließen des Rohres an, was durch die gestrichelten Pfeile kenntlich gemacht sein soll.

## Patentansprüche

1. Herstellungsverfahren für Flachrohre, aus wenigstens einem Streifen endlosen Bandmaterials (Bb) mit wenigstens einem Wandteil (a) und einem mit Wellen ausgebildeten Innenteil (c), auf einer mit Walzenpaaren ausgerüsteten Walzenstraße, wobei der Streifen in Längsrichtung (LR) durch die Walzen läuft und umgeformt wird, wobei das mit Wellen ausgebildete Innenteil (c) zwischen das umgeformte Wandteil (a, b) gebracht wird, wonach das Schließen des Flachrohrs durchgeführt wird, **dadurch gekennzeichnet, dass** in Längsrichtung (LR) des Streifens (c) laufende, mit Abstand angeordnete Verdünnungslinien (B) ausgebildet werden und dass in den Verdünnungslinien (B) liegende Wellenberge (Wb) und Wellentäler (Wt) hergestellt werden, und dass das Flachrohr mit zwei verstärkten Schmalseiten (1) ausgebildet wird.

2. Herstellungsverfahren nach Anspruch 1, **dadurch gekennzeichnet, dass** das Innenteil (c) und das Wandteil (a) Teile eines einzigen Streifens sind.

3. Herstellungsverfahren nach Anspruch 1, **dadurch gekennzeichnet, dass** das Innenteil (c) aus einem ersten Streifen und das Wandteil (a) aus einem zweiten Streifen gebildet werden.

4. Herstellungsverfahren nach Anspruch 1, **dadurch gekennzeichnet, dass** das Innenteil (c) aus einem ersten Streifen gebildet wird und dass das Wandteil (a) aus einem zweiten und aus einem dritten Streifen (b) gebildet wird.

5. Herstellungsverfahren nach Anspruch 1, **dadurch gekennzeichnet, dass** vor oder nach der Ausbildung der Verdünnungslinien (B) zwischen denselben sich erstreckende Turbulatoren (T) eingebracht und/oder aus der Ebene des Streifens (c) herausgestellt werden.

6. Herstellungsverfahren nach einem der vorstehenden Ansprüche, **dadurch gekennzeichnet, dass** die Verdünnungslinien (B) in parallelen Linien ausgebildet werden.

7. Herstellungsverfahren nach einem der vorstehenden Ansprüche, **dadurch gekennzeichnet, dass** die Verdünnungslinien (B) abwechselnd an der Oberseite und an der Unterseite des Streifens ausgebildet werden.

8. Herstellungsverfahren nach einem der vorstehenden Ansprüche 1 - 6, **dadurch gekennzeichnet, dass** die Verdünnungslinien (B) alle an einer Seite des Streifens (c) ausgebildet werden.

9. Herstellungsverfahren nach einem der vorstehenden Ansprüche, **dadurch gekennzeichnet, dass** sämtliche Verdünnungslinien (B) mittels vorzugsweise eines einzigen Walzenpaares (W1) ausgebildet werden.

10. Herstellungsverfahren nach einem der vorstehenden Ansprüche, **dadurch gekennzeichnet, dass** die Wellenberge (Wb) und die Wellentäler (Wt) mittels Walzenpaare durch die der Streifen in seiner Längsrichtung hindurch läuft ausgebildet werden

11. Walzenstraße zur Durchführung des Verfahrens zur Herstellung von Flachrohren (1) aus wenigstens einem endlosen Streifen Bandmaterials, gemäß wenigstens einem der vorstehenden Verfahrensansprüche, wobei die Walzenstraße wenigstens einen Abschnitt (U) zum Umformen des Streifens, einen Abschnitt (V) zum Vereinigen des Streifens zum Rohr (1) und eine Abtrennstation (A) für Rohre (1) aufweist, **dadurch gekennzeichnet, dass** die Walzenstraße wenigstens ein Walzenpaar (W1) aufweist, mit dem in Längsrichtung des Streifens (c) laufende Verdünnungslinien (B) herstellbar sind, dass wenigstens ein weiteres Walzenpaar (W3) vorgesehen ist, mit dem in den Verdünnungslinien (B) liegende Wellenberge (Wb) und Wellentäler (Wt) herstellbar sind und dass Mittel zur Ausbildung von zwei verstärkten Schmalseiten angeordnet sind.

12. Walzenstraße nach Anspruch 11, **dadurch gekennzeichnet, dass** die Walzenstraße eine Perforationsstation (P) zum Perforieren der Streifen und einen Abschnitt (Ü) zum In - Übereinstimmung - Bringen der Perforationen (3) in den perforierten Teilen (a, b) aufweist.

13. Walzenstraße nach Anspruch 12, **dadurch gekennzeichnet, dass** die Anzahl von Perforationsstationen (P) vorzugsweise der Anzahl der Streifen entspricht.

14. Walzenstraße nach Anspruch 11, **dadurch gekennzeichnet, dass** die Walzenstraße wenigstens ein Walzenpaar (W2) zur Ausbildung von Turbolatoren (T) oder von Löchern in dem einen Streifen (c) aufweist.

## Claims

1. Production method for producing flat tubes, from at least one strip of endless band material (Bb), having at least one wall part (a) and having an inner part (c) which is formed with corrugations, on a roller train which is provided with roller pairs, with the strip running in the longitudinal direction (LR) through the rollers and being shaped, and with the inner part (c) formed with corrugations being placed between the shaped wall part (a, b), after which the closure of the flat tube is carried out,
**characterized in that** thinning lines (B) are formed which run in the longitudinal direction (LR) of the strip (c) and are arranged with a spacing, and **in that** corrugation peaks (Wb) and corrugation troughs (Wt) are produced which are situated in the thinning lines (B), and **in that** the flat tube is formed with two reinforced narrow sides (1).

2. Production method according to Claim 1, **characterized in that** the inner part (c) and the wall part (a) are parts of a single strip.

3. Production method according to Claim 1, **characterized in that** the inner part (c) is formed from a first strip and the wall part (a) is formed from a second strip.

4. Production method according to Claim 1, **characterized in that** the inner part (c) is formed from a first strip and the wall part (a) is formed from a second and from a third strip (b).

5. Production method according to Claim 1, **characterized in that**, before or after the formation of the thinning lines (B), turbulators (T) which extend between said thinning lines (B) are formed and/or raised out of the plane of the strip (c).

6. Production method according to one of the preceding claims, **characterized in that** the thinning lines (B) are formed in parallel lines.

7. Production method according to one of the preceding claims, **characterized in that** the thinning lines (B) are formed alternately on the upper side and on the lower side of the strip.

8. Production method according to one of the preceding Claims 1 - 6, **characterized in that** the thinning lines (B) are all formed on one side of the strip (c).

9. Production method according to one of the preceding claims, **characterized in that** all the thinning lines (B) are formed by means of preferably a single roller pair (W1).

10. Production method according to one of the preceding claims, **characterized in that** the corrugation peaks (Wb) and the corrugation troughs (Wt) are formed by means of roller pairs through which the strip runs in its longitudinal direction.

11. Roller train for carrying out the method for producing flat tubes (1), from at least one endless strip of band material, according to at least one of the preceding method claims, with the roller train having at least one section (U) for shaping the strip, a section (V) for joining the strip to form a tube (1), and a separating station (A) for tubes (1), **characterized in that** the roller train has at least one roller pair (W1) which can be used to produce thinning lines (B) which run in the longitudinal direction of the strip (c), **in that** at least one further roller pair (W3) is provided with which corrugation peaks (Wb) and corrugation troughs (Wt) can be produced which are situated in the thinning lines (B), and **in that** means are arranged for forming two reinforced narrow sides.

12. The roller train according to Claim 11, **characterized in that** the roller train has a perforation station (P) for perforating the strip and a section (Ü) for aligning the perforations (3) in the perforated parts (a, b).

13. Roller train according to Claim 12, **characterized in that** the number of perforation stations (P) preferably corresponds to the number of strips.

14. Roller train according to Claim 11, **characterized in that** the roller train has at least one roller pair (W2) for forming turbulators (T) or holes in the one strip (c).

## Revendications

1. Procédé de production de tuyaux plats, à partir d'au moins une bande de matériau en bande sans fin (Bb) avec au moins une partie de paroi (a) et une partie interne (c) réalisée avec des ondulations, sur un train de laminoir équipé de paires de cylindres, dans lequel la bande défile en direction longitudinale (LR) et est déformée à travers les cylindres, dans lequel la partie interne (c) réalisée avec des ondulations est placée entre les parties de paroi déformées (a, b), puis on opère la fermeture du tuyau plat, **caractérisé en ce que** l'on forme des lignes d'amincissement (B) disposées à distance et s'étendant dans la direction longitudinale (LR) de la bande (c) et **en ce que** l'on réalise des crêtes d'ondulation (Wb) et des vallées d'ondulation (Wt) situées dans les lignes d'amincissement (B), et **en ce que** l'on forme le tuyau plat avec deux côtés étroits renforcés (1).

2. Procédé de production selon la revendication 1, **caractérisé en ce que** la partie interne (c) et la partie de paroi (a) sont des parties d'une seule et même bande.

3. Procédé de production selon la revendication 1, **caractérisé en ce que** la partie interne (c) est formée à partir d'une première bande et la partie de paroi (a) est formée à partir d'une deuxième bande.

4. Procédé de production selon la revendication 1, **caractérisé en ce que** la partie interne (c) est formée à partir d'une première bande et **en ce que** la partie de paroi (a) est formée à partir d'une deuxième et d'une troisième bandes (b).

5. Procédé de production selon la revendication 1, **caractérisé en ce que**, avant ou après la formation des lignes d'amincissement (B), on crée des générateurs de turbulence (T) s'étendant entre celles-ci et/ou on les fait surgir hors du plan de la bande (c).

6. Procédé de production selon l'une quelconque des revendications précédentes, **caractérisé en ce que** l'on réalise les lignes d'amincissement (B) en lignes parallèles.

7. Procédé de production selon l'une quelconque des revendications précédentes, **caractérisé en ce que** l'on réalise les lignes d'amincissement (B) en alternance sur la face supérieure et sur la face inférieure de la bande.

8. Procédé de production selon l'une quelconque des revendications 1 à 6, **caractérisé en ce que** l'on réalise toutes les lignes d'amincissement (B) sur une face de la bande (c).

9. Procédé de production selon l'une quelconque des revendications précédentes, **caractérisé en ce que** l'on réalise toutes les lignes d'amincissement (B) de préférence au moyen d'une seule paire de cylindres (W1) .

10. Procédé de production selon l'une quelconque des revendications précédentes, **caractérisé en ce que** l'on réalise les crêtes d'ondulation (Wb) et les vallées d'ondulation (Wt) au moyen de paires de cylindres, à travers lesquelles la bande défile dans sa direction longitudinale.

11. Train de laminoir pour la mise en oeuvre du procédé de production de tuyaux plats (1) à partir d'au moins une bande sans fin d'un matériau en bande, selon au moins une des revendications précédentes, dans lequel le train de laminoir comporte au moins une partie (U) destinée à déformer la bande, une partie (V) destinée à réunir la bande en un tube (1) et une station de coupe (A) pour les tubes (1), **caractérisé en ce que** le train de laminoir comprend au moins une paire de cylindres (W1), avec laquelle on peut réaliser des lignes d'amincissement (B) s'étendant dans la direction longitudinale de la bande (c), **en ce qu'**il est prévu au moins une autre paire de cylindres (W3), avec laquelle on peut réaliser des crêtes d'ondulation (Wb) et des vallées d'ondulation (Wt) situées dans les lignes d'amincissement (B), et **en ce que** des moyens sont disposés pour réaliser deux côtés étroits renforcés.

12. Train de laminoir selon la revendication 11, **caractérisé en ce que** le train de laminoir comprend une station de perforation (P) pour perforer les bandes et une partie (Ü) pour mettre en correspondance les perforations (3) dans les parties perforées (a, b).

13. Train de laminoir selon la revendication 12, **caractérisé en ce que** le nombre de stations de perforation (P) correspond de préférence au nombre des bandes.

14. Train de laminoir selon la revendication 11, **caractérisé en ce que** le train de laminoir comprend au moins une paire de cylindres (W2) destinés à former des générateurs de turbulence (T) ou des trous dans une première bande (c).
